Europäisches Patentamt

European Patent Office

Office européen des brevets

(11) Veröffentlichungsnummer: **0 459 199 B1**

## (12) EUROPÄISCHE PATENTSCHRIFT

(45) Veröffentlichungstag der Patentschrift: **05.10.94**

(21) Anmeldenummer: **91107668.5**

(22) Anmeldetag: **11.05.91**

(51) Int. Cl.5: **C08L 77/00**, C08L 77/02,
//(C08L77/00,53:02)

(54) **Lactamschmelzen mit erhöhter Viskosität und ihre Verwendung.**

(30) Priorität: **26.05.90 DE 4016995**
**22.12.90 DE 4041522**

(43) Veröffentlichungstag der Anmeldung:
**04.12.91 Patentblatt 91/49**

(45) Bekanntmachung des Hinweises auf die
Patenterteilung:
**05.10.94 Patentblatt 94/40**

(84) Benannte Vertragsstaaten:
**DE FR GB IT NL**

(56) Entgegenhaltungen:
**EP-A- 0 121 606**
**FR-A- 2 465 765**
**US-A- 4 242 470**

(73) Patentinhaber: **BAYER AG**

**D-51368 Leverkusen (DE)**

(72) Erfinder: **Heinz, Hans-Detlef, Dr.**
**Breslauer Strasse 31**
**W-4150 Krefeld (DE)**
Erfinder: **Fahnler, Friedrich, Dipl.-Ing.**
**Wimmersweg 60**
**W-4150 Krefeld 1 (DE)**
Erfinder: **Stollfuss, Bernd, Dipl.-Ing.**
**Am Katterbach 76**
**W-5060 Bergisch Gladbach 2 (DE)**

**EP 0 459 199 B1**

EP 0 459 199 B1

**Beschreibung**

Die Erfindung betrifft Lactammischungen, ergebend Lactamschmelzen mit erhöhter Viskosität, ihre Herstellung sowie ihre Verwendung, bevorzugt im Bereich der aktivierten anionischen Lactampolymerisation (zu Gußpolyamiden). Den Lactam(schmelz)en (A) werden erfindungsgemäß bestimmte ungesättigte Vinylaromat-Dien-Blockcopolymere (B), die sich in der Lactamschmelze lösen, in Mengen von 1 bis 15 Gew.-%, sowie gegebenenfalls zusätzlich eine weitere, mit den Dien-Blockcopolymeren (B), kompatible Komponente (C), welches sich vollständig oder teilweise in der Lactamschmelze auflöst, zugesetzt. Die eingesetzten Blockcopolymeren (B) enthalten 10 bis 85 Gew.-% Vinylaromat-Einheiten und 15 bis 90 Gew.-% Dien-Einheiten. Die Blockcopolymeren (B) können auch teilweise hydriert, epoxidiert oder gepfropft sein.

Bevorzugtes Lactam ist ε-Caprolactam.

Lactamschmelzen erhöhter Viskosität eignen sich besonders für die Aufnahme von Verstärkungs- und Füllstoffen (D) und zur Herstellung gefüllter Gußpolyamide.

Weiterhin werden auch die Verwendung derartig verdickter, insbesondere füllstoff-/verstärkungsstoffhaltiger Lactamschmelzen in einem Verfahren zur Herstellung von Polyamiden, sowie entsprechende Polyamidformkörper, besonders nach dem anionisch aktivierten Gießverfahren, beansprucht.

Gußpolyamidteile, z.B. aus Caprolactam hergestellt, weisen bekanntlich ein hohes Niveau der mechanischen Eigenschaften auf; aufgrund ihrer gegenüber Standardspritzgußteilen erhöhten Kristallinität sowie der wesentlich höheren Molekulargewichte sind fast alle mechanischen Eigenschaftswerte gegenüber durch Polykondensation hergestellten Polyamiden verbessert. Aus diesem Grund ist Gußpolyamid ein attraktiver Werkstoff.

Ein Nachteil gegenüber den durch Polykondensation hergestellten Polyamiden liegt aber darin, daß das Gußpolyamid sich im allgemeinen nicht thermoplastisch verarbeiten läßt. Alle Zusatzstoffe, die im Formteil anwesend sein sollen, müssen daher im allgemeinen in die Lactamschmelze vor der Polymerisation eingebracht werden.

Die Herstellung von Gußpolyamidteilen, ausgehend von niedrigviskosen Lactamschmelzen und Katalysatoren sowie Aktivatoren (aktivierte anionische Polymerisation) ist bekannt (z.B. Vieweg, Müller; Kunststoff-Handbuch Bd. VI., Carl Hanser Verlag, München 1966). Gegenüber Polyurethan-RIM-Systemen ist die Verfahrenstechnik einfacher, da z.B. aufgrund der sehr niedrigviskosen Lactamschmelzen drucklos und unter Einsatz einfacher Pumpen oder auch nach der Reaktionsspritztechnik (unter Druck) gefördert werden kann.

Für viele Einsatzgebiete wäre es nun wünschenswert, die guten mechanischen Eigenschaften von Gußpolyamidteilen weiter zu steigern, z.B. Härte, Steifigkeit und Festigkeit, vor allem auch den Kriechmodul, indem Verstärkungs- bzw. Füllstoffe zugesetzt werden, wie es von Spritzgußmaterialien her bekannt ist. Genau hier wirkt sich aber die geringe Viskosität der Lactamschmelzen sehr nachteilhaft aus, da aufgrund des Dichteunterschiedes z.B. Glasfasern sehr schnell sedimentieren. Dies macht die Herstellung eines glasfaserverstärkten Gußpolyamids auf konventionellem Wege sehr schwierig. Es wäre daher wünschenswert, die Viskosität von Lactamschmelzen auf einfache Weise deutlich erhöhen zu können.

Problematisch ist hier allerdings, daß die aktivierte anionische Polymerisation von Lactamen ein chemisch sehr empfindliches System darstellt, das durch die allermeisten Zusatzstoffe gestört wird. Übliche Verdickungsmittel wie Polyacrylamid stören im allgemeinen entweder die Polymerisation oder sind in den Lactamschmelzen zu wenig löslich.

EP-A-0 121 606 beschreibt ein Verfahren zur Herstellung von Schlagzähen Polyamid-Formmassen durch alkalische Lactam polymerisation, wobei die Polymerisation in Gegenwart von Pfropf polymerisaten durch geführt wird.

Überraschend wurde nun gefunden, daß die Viskosität von Lactamschmelzen durch Zusatz spezieller ungesättigter Vinylaromat-Dien-Blockcopolymerer (B) sowie gegebenenfalls zusätzlich einer weiteren Zusatzkomponente (C), welche mit den Dienblöcken mischbar ist, deutlich erhöht werden kann und daß durch diese Maßnahme die aktivierte anionische Polymerisation im allgemeinen nicht oder in nur unbedeutendem Maße gestört wird. Weiterhin wurde gefunden, daß diese Lactam-Mischungen sich sehr gut zur Herstellung verstärkter und gefüllter Gußpolyamidteile eignen, da die Füllstoffe/Verstärkungsstoffe (D) entweder gar nicht oder nur so langsam in der Schmelze sedimentieren, daß eine gute homogene Verteilung in den Formkörpern resultiert.

Gegenstand der Erfindung sind daher Lactam-Mischungen, mit einer Viskosität von 10-2000 mPas (150° C, 20 sec$^{-1}$ im Rotationsviskosimeter) in der Schmelze, dadurch gekennzeichnet, daß sie

A) ω-Lactame, inbesondere ε-Caprolactam,

B) 1 - 15 Gew.-%, bezogen auf (A + B), bevorzugt 3 - 12 Gew.-% und besonders bevorzugt 4 - 10 Gew.-%, an Vinylaromat-Dien-Blockcopolymeren (B), bestehend aus 10 - 85 Gew.-%, bevorzugt 20 - 80 Gew.-

2

% und besonders bevorzugt 30 - 55 Gew.-% an Vinylaromat-Einheiten und 15 -90 Gew.-%, bevorzugt 20 - 80 Gew.-% und besonders bevorzugt 45 - 70 Gew.-% an Dieneinheiten, wobei die Blockcopolymeren (B) gegebenenfalls auch durch teilweise Hydrierung der Dien-Weichsegmente bis zu einem Hydrierungsgrad von 60% und/oder durch Pfropfung mit reaktiven Monomeren und/oder anderen Modifizierungsmitteln modifiziert sein können, wobei die Blockcopolymere gelöst vorliegen und unlösliche Anteile nicht mehr als 5 % betragen, sowie gegebenenfalls zusätzlich

C) 0 - 20 Gew.-%, vorzugsweise 0,1 - 20 Gew.-%, an mit den Dienblöcken kompatible Stoffe wie aromatische und aliphatische Kohlenwasserstoffe, Öle, Wachse, Schmiermittel,

sowie

D) 0 - 50 Gew.-%, bevorzugt 5 - 50 Gew.-% besonders bevorzugt 5 - 40 Gew.-%, bezogen auf (A + B + C) an Füll- und Verstärkungsstoffen, sowie gegebenenfalls übliche Zusatzstoffe, enthalten.

Die verdickten Lactamschmelzen (Lactam-Mischungen) können zur Herstellung von Polyamiden, insbesondere über das Verfahren der aktivierten anionischen Polymerisation, insbesondere zur Herstellung verstärkter und/oder gefüllter Gußpolyamidteile verwendet werden.

Geeignete Vinylaromat-Dien-Blockcopolymere (B) umfassen im Rahmen der Erfindung sowohl solche mit unmodifizierten Blöcken wie auch solche mit nachträglich modifizierten Blöcken, z.B. solche, in denen die Dien-Blöcke teilweise (maximal zu 60 %, vorzugsweise zu <50 %) hydriert oder durch Pfropfung modifiziert sind.

Bevorzugte Monomere für die Vinylaromat-Blöcke sind Styrol, $\alpha$-Methylstyrol, m- bzw. p-Methylstyrol (bzw. ihr Gemisch, "Vinyltoluol") sowie 2- und 4-Vinylpyridin. Bevorzugte Monomere zum Aufbau der Dien-Blöcke sind Butadien, Isopren und 2,3-Dimethylbutadien. Besonders bevorzugt sind Styrol, $\alpha$-Methylstyrol, m- bzw. p-Methylstyrol, Butadien und Isopren. Ganz besonders bevorzugt sind Styrol und Butadien.

Die Vinylaromat- bzw. Dienblöcke (bzw. z.B. teilhydrierten Dienblöcke) können nun in verschiedener Weise zu Blockcopolymeren zusammengesetzt sein; erfindungsgemäß geeignet sind beispielsweise A'B'-Diblockcopolymere, A'B'A'- bzw. B'A'B'-Triblockcopolymere, (A'B')$_n$-Multiblockcopolymere. Dabei bedeuten A' bzw. B' die Blöcke in den Blockcopolymeren B). Die erfindungsgemäß einsetzbaren Blockcopolymeren (B) können auch einen sternförmigen Aufbau haben, z.B. durch Kopplung mit SiCl$_4$ nach anionischer Polymerisation. Die Blockcopolymeren können auch zwischen den einzelnen Vinylaromat- bzw. Dien-Blöcken Mischblöcke ("tapered" oder "overlap-structures") aufweisen. Die einzelnen Blöcke können auch verzweigt sein. Die Dienblöcke können auch nachträglich chemisch modifiziert sein, z.B. durch partielle (bis 60%) Hydrierung und/oder durch Pfropfung mit reaktiven Monomeren, z.B. mit ungesättigten Carbonsäuren, Maleinsäureanhydrid, Maleinsäurehalbestern oder Maleinimiden oder auch durch Epoxidierung, wie dies im Stand der Technik bekannt ist.

Geeignete Blockcopolymere sind beispielsweise Styrol-Butadien-Diblockcopolymere, Styrol-Isopren-Diblockcopolymere, Styrol-Butadien-Styrol-Triblockcopolymere, Styrol-Isopren-Styrol-Triblockcopolymere, Styrol-Butadien-Multiblockcopolymere, Styrol-Isopren-Multiblockcopolymere, Maleinsäureanhydrid gepfropfte (bzw. carboxylierte), teilhydrierte oder nicht hydrierte Styrol-Butadien-Styrol-Triblockcopolymere, und epoxidierte Styrol-Butadien-Styrol-Triblockcopolymere. Die genannten Blockcopolymere gehören zu den bevorzugt im Rahmen der Erfindung einzusetzenden Blockcopolymeren. Insbesondere bevorzugt sind Diblock-Copolymere wie Styrol-Butadien-Diblockcopolymere.

Geeignete Blockcopolymere sind beispielsweise unter den Namen Solprene®, Kraton®D, Cariflex®, Tufprene® TR und Buna BL® kommerziell erhältlich.

Die Blockcopolymeren (B) sollen 10 bis 85 Gew.-% an Vinylaromat-(VA) bzw. 90 bis 15 Gew.-% an Dieneinheiten (DJ), bevorzugt 20 bis 80 Gew.-% (VA) bzw. 80 bis 20 Gew.-% (DJ) und besonders bevorzugt 30 bis 55 Gew.-% (VA) bzw. 70 bis 45 Gew.-% (DJ) enthalten. Die Blockcopolymeren können auch übliche Additive, z.B. Stabilisatoren enthalten.

Die Blockcopolymere sollen bis zu 1 bis 15 Gew.-% zur Herstellung der erfindungsgemäßen Lactammischungen (Schmelzen) eingesetzt werden.

Als mit den Dienblöcken kompatible bzw. mischbare Komponenten C) sind prinzipiell alle nieder- und hochmolekularen Substanzen geeignet, welche mit Polydienen homogen vermischbar sind bzw. homogene Mischungen bzw. Losungen mit ihnen ergeben. Beispiele für solche Komponenten sind aliphatische und aromatische Kohlenwasserstoffe wie Polybutadien(öl)e, hydroxyl- und phenylterminierte Polybutadien(öl)e, Polyethylenwachse, Poly-$\alpha$-olefin(öl)e, Polyisopren(öl)e, Polyoctylen(öl)e, Mineralöle bzw. Schmiermittel auf Basis von Aliphaten, Aromaten und Cycloaliphaten, mineralöllösliche Polyether, alkylmodifizierte Polyether, Silikon(öl)e, Ligroine, natürliche bzw. synthetische Wachse.

Die oben beschriebenen Komponenten C) können in Caprolactam alleine löslich sein oder auch nicht Bevorzugte Komponenten dieser Art haben (mittlere) Molekulargewichte ($\overline{M}_n$) von mindestens 200 g/mol, besonders bevorzugt mindestens 300 g/mol und insbesondere bevorzugt mindestens 500 g/mol, und

EP 0 459 199 B1

Siedepunkte, wenn überhaupt flüchtig, von mindestens 200°C, besonders bevorzugt mindestens 250°C und insbesondere bevorzugt mindestens 300°C. Weiterhin liegen die Schmelz/Erweichungspunkte der bevorzugten weiteren Komponenten C) nicht höher als 150°C, insbesondere nicht höher als 100°C. Die ganz besonders bevorzugten Komponenten C) weisen Schmelzpunkte von maximal 60°C auf und sind insbesondere im Bereich von 20 bis 60°C flüssig.

Die genannten Komponenten C) werden, wenn gewünscht, in Mengen von bis 20 Gew.-%, bezogen auf die fertige Lactammischung, bevorzugt zu 0,5 bis 12 Gew.-% und besonders bevorzugt zu 1 bis 10 Gew.-%, eingesetzt.

Die beschriebenen Komponenten C) können in Kombination mit den Blockcopolymeren B), je nach Lösebedingungen, zu höheren Viskositätswerten und einer geringeren Temperaturabhängigkeit der Viskosität führen.

Bevorzugte Lactamschmelzen/-mischungen entsprechend der Erfindung zeigen eine Viskositäts/Temperatur-Anomalie, d.h. die Viskosität steigt in einem bestimmten Temperaturbereich (hier üblicherweise ca. 110-180°) mit wachsender Temperatur, anstatt wie üblich zu sinken, an; sie weisen dazu i.a. eine ausgeprägte Strukturviskosität auf.

Die Verdicker B) oder (B + C)-Verdickerkombinationen werden in einer solchen Menge zugesetzt, daß die Viskosität der fertigen Mischung (bei 150°C und ca, 20 s$^{-1}$) 10 - 2000, bevorzugt 50 - 1500 und besonders bevorzugt 100 - 1000 mPa.s, jeweils ohne Füll-/Verstärkungsstoffe D) beträgt. Viskositäten von mindestens ca, 50 mPa.s sind im allgemeinen ausreichend, um, je nach Art und Menge, eine ausreichend stabile Dispersion der Füll- und Verstärkungsstoffe, z.B. Glasfasern, zu erreichen. Andererseits sollte die Viskosität der Lactamschmelze (ohne Füll-/Verstärkungsstoffe) bevorzugt nicht höher als ungefähr 1500 mPa.s, besonders bevorzugt 1000 mPa.s, liegen, da andernfalls die Verarbeitbarkeit erschwert sein kann.

Es ist bevorzugt, die Verdickerkombination (B + C) in der Lactamschmelze gelöst zu haben, Darunter wird im Rahmen der Erfindung verstanden, daß eine für das Auge klare, gegebenenfalls leicht opake Schmelze vorliegt, Eventuell vorhandene unlösliche Anteile sollten bevorzugt nicht mehr als maximal 5 % betragen.

Als ω-Lactame A) sind Lactame mit mindestens 4 C-Atomen (4, 6-12 C-Atomen im Ring) geeignet. Bevorzugte Lactame sind ε-Caprolactam und ω-Laurinlactam, besonders bevorzugt wird ε-Caprolactam verwendet, Die Lactame können auch in einem beliebigen Gemisch eingesetzt werden.

Zur Herstellung der erfindungsgemäßen Lactammischungen/schmelzen können beispielsweise die Lactame A) mit den reinen Komponenten B), C) gemischt und aufgeschmolzen oder auch die reinen Komponenten B) und C) bzw. Lösungen derselben in flüchtigen Lösungsmitteln mit geschmolzenen Lactamen gemischt werden (unter gegebenenfalls anschließendem Abziehen des Lösungsmittels). Es können auch Konzentrate (Masterbatches) der Komponenten B) bzw. C), beispielsweise in Caprolactam, oder auch gleich ölgestreckte Blockcopolymere, eingesetzt werden. Bevorzugt werden die Verdicker-(Kombinationen) dem geschmolzenen Lactam zugesetzt.

Es können neben den erfindungsgemäß einzusetzenden Verdicker B) oder Verdickerkombinationen (B + C) und den gegebenenfalls anwesenden Füll- bzw, Verstärkungsstoffen D) auch weitere, übliche Zusatzstoffe wie (gegebenenfalls fundtionalisierte) Kautschuke bzw. in Polyamide einbaufahige, funktionalisierte Weichsegmente, in der Schmelze enthalten sein, z.B. Polyether, Polydiene u.a., wie sie im Stand der Technik für Polyamide beschrieben sind. Funktionalisierte Weichsegmente die NH$_2$-Gruppen enthalten, werden chemisch, z.B. als Blöcke, in das PA miteingebaut. Entsprechende Weichsegmente sowie Verfahren, sie in das PA einzubauen, z.B. über Kopplung an den Aktivator, sind in großer Zahl bekannt. Beispielsweise können aminhaltige Weichsegmente, z.B. Polyether, mit Polyisocyanaten zu Isocyanatterminierten Weichsegementen umgesetzt werden, welche dann einen polymeren Aktivator darstellen, oder es können OH-terminierte Polyether mit Dicarbonsäuredichloriden, z.B. Terephthalsäuredichlorid, zu Säurechlorid-terminierten Polyethern und anschließend mit einem Lactam zu einem polymeren Aktivator umgesetzt werden.

Je nach Art des Elastomersegments bzw. der Endgruppen bzw. der Art der Verknüpfung mit dem Aktivator kann die Wahl des Katalysator aber eingeschränkt sein, z.B. dann, wenn der Katalysator das Elastomersegment abbaut. Entsprechende optimale Kombinationen sind bevorzugt erfindungsgemäß einzusetzen.

Prinzipiell sind als Verdicker für Lactamschmelzen alle in dem jeweiligen Lactam bei ca. 140°C gut löslichen Polymere geeignet; die Wahl wird jedoch drastisch eingeschränkt, da die aktivierte anionische Polymerisation von Lactamen ein chemisch sehr empfindliches System darstellt, welches mit einer Vielzahl von Strukturen, inbesondere H-aciden Verbindungen, reagieren kann, was sich dann durch Polymerisationsstörungen bemerkbar macht. Die überraschende Erkenntnis war, daß die erfindungsgemäß einzusetzende Verdicker B) oder Verdicker-Kombination B) + C) im allgemeinen, wenn überhaupt, nur relativ geringe

4

EP 0 459 199 B1

Polymerisationsstörungen bewirkt (das Ausmaß von Polymerisationsstörungen kann von dem jeweils verwendeten Katalysator/Aktivatorsystem abhängen), eine gute Viskositätsergiebigkeit und auch eine sehr gute Löslichkeit zeigt. Die erfindungsgemäß einzusetzende Verdickerkombiantion stellt also ein besonders geeignetes Verdickersystem dar, Das erreichte Viskositätsniveau kann von den Lösebedingungen abhängen. Ein bevorzugtes Löseprogramm besteht aus a) 1 h 140°C und anschließend b) wenige Minuten bis 1 h bei 150°C.

Als Füll- bzw. Verstärkungsstoffe D) (bis 50 Gew.-%, bevorzugt 5 bis 50 Gew.-% besonders bevorzugt 5 - 40 Gew.-%) sind prinzipiell die üblicherweise eingesetzten Stoffe geeignet, wobei, je nach Zusammensetzung der Schlichte, nicht alle gleich gut geeignet sein können, Beispiele für erfindungsgemäß einsetzbare Füll-/Verstärkungsstoffe zur Herstellung der verstärkten/gefüllten Gußpolyamidteile sind Glasfasern, Glaskugeln, mineralische Füllstoffe, Kohlenstoffasern, Aramidfasern und andere mehr, wie sie in vielfacher Weise im Stand der Technik bekannt sind; vielfach tragen sie bestimmten Schlichten (z.B. mit PU-Dispersionen) oder sind entsprechend vorbehandelt, z.B. silanisiert.

Es können weiterhin als Zusatzstoffe E) alle üblichen Additive, wie z.B. Entformungsmittel, UV-Stabilisatoren, Antioxidantien, Schmiermittel (z.B. $MoS_2$) andere polymere (gegebenenfalls chemisch angekoppelte) Legierungspartner und andere mehr anwesend sein, wie sie im Stand der Technik beschrieben sind.

Die Herstellung der erfindungsgemäßen (gegebenenfalls verstärkten und/oder gefüllten) Gußpolyamidteile erfolgt prinzipiell nach den üblichen Verfahren, bevorzugt jedoch nach der anionisch aktivierten Lactampolymerisation.

Es können prinzipiell alle für die aktivierte anionisch Lactampolymerisation bekannten Katalysatoren eingesetzt werden, wobei beispielhaft genannt werden: die Natriumsalze des Caprolactams und des Pyrrolidons, Natriumhydrid, Natriummethanolat, Caprolactammagnesiumbromid und -iodid.

Es können dabei prinzipiell auch alle bekannten Aktivatoren eingesetzt werden, z.B. Isocyanate, Säurechloride, Säureanhydride, Carbodiimide, Umsetzungsprodukte aus diesen Verbindungen mit Lactamen und andere, wie sie aus dem Stand der Technik generell bekannt sind.

Bevorzugte Katalysatoren sind die Natriumsalze des Caprolactams und des Pyrrolidons sowie Caprolactammagnesiumbrmoid und -iodid.

Bevorzugte Aktivatoren sind Isocyanate und Säurechloride bzw. die jeweiligen Umsetzungsprodukte mit Lactamen.

Die erfindungsgemäßen Lactamschmelzen finden ihre Verwendung vorzugsweise zur Herstellung von Gußpolyamid-Teilen (Fertigteile, Halbzeuge und andere mehr), insbesondere auch verstärkten/gefüllten Gußpolyamidteilen. Es können drucklose oder Druckverfahren (z.B. Reaktionsspritztechnik) eingesetzt werden, offene oder geschlossene Formen verwendet werden und übliche, bekannte Formtemperaturen, Heizdauer, Gießzeiten, Entformungs-/Fließ-/Entschäumer-Substanzen mitverwendet werden. Ein besonderer Vorteil der erfindungsgemäßen Lactamschmelzen liegt darin, daß suspendierte Füll- oder Verstärkungsstoffe eine erheblich bessere Suspensionsstabilität zeigen.

Die erfindungsgemäßen Lactamschmelzen können auch zur Herstellung von Polyamiden durch hydrolytische Polymerisation genutzt werden, doch liegt der besondere Effekt bei der aktivierten anionischen Polymerisation.

Die erfindungsgemäßen Lactamschmelzen weisen, wenn sie zur Herstellung von Gußpolyamid verwendet werden, bevorzugt Viskositäten von mindestens 50 mPa.s, besonders bevorzugt mindestens 100 mPa.s und ganz besonders bevorzugt mindestens 150 mPa.s (gemessen mit einem Rotationsviskosimeter) bei 150°C und 20 $s^{-1}$ auf.

Die nachfolgenden Beispiele mit typischen Einsatzstoffen in typischen Mengen dienen zur Erläuterung der Erfindung, ohne sie darauf einzuschränken.

Soweit nicht anders angegeben, wurde zur Viskositätsmessung ein Gerät der Fa. Haake (Haake-Viskotester) eingesetzt (ca. 20 - 30 $s^{-1}$ Schergefälle: schnelle Drehstufe).

Unter "Komponente C)" werden die gegebenenfalls zusätzlich zu den Blockcopolymeren anwesenden, mit den Dienblöcken kompatiblen Stoffe verstanden.

Beispiele

Beispiele 1-4

$\epsilon$-Caprolactam wurde mit verschiedenen Mengen eines Styrol-Butadien-Diblockcopolymeren (40 Gew.-% Styrol, davon 32 % im Block, 60 Gew.-% Butadien; $\overline{M}_n \sim$ 210.00 g/mol$^{-1}$) vermischt, unter $N_2$ auf 140-150°C erhitzt und bis zum Lösen des Blockcopolymeren gerührt. Anschließend wurden mit einem

5

Viskosimeter (Haake-Viskotester) die Viskositätswerte bei verschiedenen Temperaturen gemessen. Lösezeiten und Viskositätswerte sind in Tabelle 1 zusammengestellt.

## Tabelle 1:

| Bsp. | Menge Verdicker[1] (Gew.-%) | t[2] (h) | η[3] (mPa.s) bei | | |
|---|---|---|---|---|---|
| | | | 135 | 120 | 110° C |
| 1 | 5 | 1 | 30-60 | 30-60 | 60 |
| 2 | 6 | - | 90 | 60-90 | 60-90 |
| 3 | 7 | - | 240 | 210 | 210 |
| 4 | 10 | - | >1000 | - | - |

[1]) bezogen auf Mischung

[2]) Lösezeit

[3]) ca. 20 - 30 $s^{-1}$ Schergefälle

## Beispiel 5

7 g des in den Beispielen 1-4 benutzten Blockcopolymeren wurden unter Rühren innerhalb von 30 min bei 140-150° C in 90,2 g Caprolactam gelöst. Anschließend wurde die hochviskose Lösung auf 180° C aufgeheizt und 2 g Natriumcaprolactamat-Lösung (20 %ig in Caprolactam) sowie 0,8 g einer aliphatischen Polyisocyanat-Lösung (KU 2-8107, ein Produkt der Bayer AG) zugegeben. Die Polymerisation setzte nach der üblichen Zeit, wie sie sich auch ohne Zusatz des Blockcopolymeren ergibt, nämlich nach ca. 30 Sekunden ein. Das Gußpolyamid ist vernetzt, der Extraktgehalt ($H_2O$, 24 h) beträgt 3,5 %.

## Beispiele 6-9

Caprolactam, das in den vorherigen Beispielen benutzte Blockcopolymere und Glasfasern (15 Gew.-%) wurden unter $N_2$ aufgeheizt und unter Rühren innerhalb von 30 min bei 140-150° C zu einer viskosen, Glsfasern enthaltende Lactamschmelze homogenisiert. Die Viskositätswerte sind in Tabelle 2 zusammengestellt.

## Tabelle 2:

| Bsp. | Menge Verdicker[1] (Gew.-%) | (mPa.s) bei 110 | 120 | 135 | 165°C |
|---|---|---|---|---|---|
| 6 | 5 | – | 60 | 60 | – |
| 7 | 5,75 | 90 | 90 | 90 | – |
| 8 | 6,3 | 180 | 180 | 240 | – |
| 9 | 6,5 | 300-330 | 300 | 390 | – |
| 10 | 6,3 | 180 | 200 | 240 | 330 |

[1] bezogen auf Mischung; alle Proben enthielten 15 Gew.-% Kurzglasfasern

### Beispiel 10

Die Lactammischung nach Beispiel 8 wurde nach Abschluß der Viskositätsmessung bei 110°C aufgeheizt und die Viskosität beim Abkühlen erneut gemessen. Die Lactam-Schmelze zeigte eine ausgeprägte Viskositäts/Temperatur-Anomalie.

### Beispiele 11-14

Es wurden zwei Caprolactam-Lösungen a und b hergestellt.

a: 13 g desselben Blockcopolymeren wurden bei 150°C in 183,8 g Caprolactam gelöst, auf 130°C abgekühlt und 3,2 g Aktivatorlösung nach Beispiel 5 zugesetzt.

b: 13 g Blockcopolymer wurden in 179,0 g Caprolactam bei 150°C gelöst, auf 130°C abgekühlt und 8 g Katalysatorlösung nach Beispiel 5 zugesetzt.

Anschließend wurden zu verschiedenen Zeiten während der Lagerung von a bzw. b bei 130°C je 50 g Proben von a und b entnommen und dann nach Vermischen bei 180°C in üblicher Weise polymerisiert. Die Temperzeiten, Polymerisationszeiten, Extraktgehalte und Viskositäten sind in Tabelle 3 zusammengestellt.

## Tabelle 3

| Bsp. | Temperzeit bei 130°C (h) | Polym. Zeit[1] (min) | Extrakt[2] (%) | $\eta_{rel}$[3] |
|---|---|---|---|---|
| 11 | 0 | 6 | 5,8 | vernetzt |
| 12 | 4 | 8 | 6,5 | vernetzt |
| 13 | 8 | 9 | 5,7 | vernetzt |
| 14 | 16 | 11 | 6,5 | vernetzt |

[1] Zeit bis zum Einsetzen der Polymerisation
[2] $H_2O$, 24 h
[3] relative Viskosität, 1%ig in m-Kresol, 25°C

Der Abfall der Polymerisationsfähigkeit liegt im normalen Rahmen.

Beispiele 15 und 16

Es wurden zwei Schmelzen, jeweils ohne beziehungsweise mit 15 Gew.-% Kurzglasfasern, hergestellt.
c: 24,5 g desselben Blockcopolymeren wurden bei 150°C unter Rühren in 311,5 g Caprolactam gelöst (30 min), die Lösung auf 125°C abgekühlt und 14 g desselben Katalysators sowie in einem Fall noch zusätzlich 62 g Glasfasern zugegeben.
d: In derselben Weise wurden Lösungen von 24,5 g Blockcopolymer in 319,9 g Caprolactam, 5,6 g Aktivatorlösung sowie in dem einen Fall zusätzlich noch 62 g Kurzglasfasern hergestellt.
Die Lösungen wurden jeweils in einem 2 l-Becherglas vermischt und bei 180°C polymerisiert.
Es resultierten homogene, glänzende Blöcke, wobei die glasfaserhaltigen Ansätze eine gute, gleichmäßige Dispergierung der Glasfasern ergaben.

Beispiele 17 - 20

In einem Kolben wurden unter $N_2$ 234,3 g $\epsilon$-Caprolactam mit verschiedenen Mengen eines Polybutadienöls (45 % Vinyl-, 55 % cis-, trans 1,4; ($\overline{M}_n$ ~ 4500 g/mol) bei 140-150°C aufgeschmolzen und homogenisiert. Dann wurden je 15,75 g eines Styrol-Butadien-Zweiblockcopolymeren (40 Gew.-% Styrol, davon 32 % im Block; 60 Gew.-% Butadien; $\overline{M}_w$ ~ 210.000 g/mol) dazugegeben und bis zur Auflösung gerührt.
Die Viskositätswerte sind in Tabelle 4 zusammengestellt.

Beispiele 21 - 23

In der für die Beispiele 17 - 20 beschriebenen Weise wurden Lactamschmelzen, enthaltend als Komponente 2) verschiedene Mengen eines Polybutadiendiols (20 % Vinyl-, 20 % cis- und 60 % trans-1,4; (Aldrich 19 079-9) und 6,3 Gew.-% des Zweiblock-Copolymeren der vorhergehenden Beispiele hergestellt.
Die Viskositätsdaten sind ebenfalls in Tabelle 4 enthalten.

Beispiele 24 + 25

In derselben Weise wurden Lactamschmelzen enthaltend als Komponente 2) ein phenylterminiertes Polybutadien (45 % Vinyl-, 10 % trans- und 5 % cis-1,4-Gehalt; Gesamtgehalt an Doppelbindungen 60 %; $\overline{M}_n$ ~ 1800 g/mol); Aldrich 20,043-3 sowie 6,3 Gew.-% des Zweiblock-Copolymeren 1), hergestellt.
Die Viskositätswerte finden sich in Tabelle 4.

Beispiele 26

In derselben Weise wurden als Komponente 2) 2,5 g eines Polybutadiens (20 % cis-, 60 % trans-1,4, 20 % Vinyl; $T_G$ = -95°C; Aldrich 18,138-2) eingesetzt. Das Polybutadien ging nicht vollständig in Lösung.
Die Viskositätswerte sind in Tabelle 5 zusammengestellt.

Beispiele 27 - 29

In derselben Weise wurde ein überwiegend cis-1,4-Polybutadien (Aldrich 18,137-4; $\overline{M}_n$ ~ 200 bis 300.000 g/mol) als Komponente 2) eingesetzt. Es war nicht vollständig gelöst.
Viskositätswerte sind in Tabelle 5 enthalten.

Beispiele 30 - 31

In derselben Weise wurden als Komponente 2) zwei verschiedene Öle, wie sie typischerweise zur Herstellung von ölgefülltem Gußpolyamid verwendet werden, eingesetzt.
Die Viskositätswerte sind in Tabelle 5 enthalten.
Bei den Ölen handelte es sich um Marlotherm S® (ein Produkte der Hüls AG) und Caloran 32® (ein Produkt der Fina).

## Tabelle 4

| Beispiel | 17 | 18 | 19 | 20 | 21 | 22 | 23 | 24 | 25 |
|---|---|---|---|---|---|---|---|---|---|
| Menge Zweiblock-copolymer [%] B) | | | ← | | 6,3 | | | | → |
| Menge [1]) Komponente [%] C) | 1 | 2 | 5 | 10 | 1 | 2 | 5 | 1 | 2 |
| Viskosität $\eta$ [mPa.s] bei T [$^{\circ}$C] | | | | | | | | | |
| 170 | – | – | – | – | – | – | 900 | 900 | 810 |
| 160 | 600 | 750 | 870 | 1800 | 450 | 510 | 870 | 780 | 750 |
| 150 | – | – | – | – | – | 480 | 750 | – | 690 |
| 140 | – | – | – | – | – | – | 690 | 630 | 630 |
| 135 | 540 | 720 | 840 | 1530 | 300 | 390 | – | – | – |
| 130 | – | – | – | – | – | – | 675 | 540 | 540 |
| 120 | 480 | 720 | 840 | 1500 | 270 | 390 | 675 | 510 | 510 |
| 110 | 450 | 660 | 840 | 1440 | 270 | 360 | 705 | 480 | 480 |
| 100 | – | – | – | – | 285 | – | 735 | 480 | 510 |
| 90 | – | – | – | – | 330 | – | 810 | 510 | 540 |

[1]) bezogen auf Caprolactam + B)

EP 0 459 199 B1

## Tabelle 5

| Beispiel | 26 | 27 | 28 | 29 | 30 | 31 |
|---|---|---|---|---|---|---|
| Menge Zweiblockcopolymer [%] A) | ← | | 6,3 | | | → |
| Menge Komponente [%] [1)] B) | 1 | 1 | 1 [2)] | 0,5 | 4 | 4 |
| Öltyp | – | – | – | – | Marlotherm | Caloran |
| η [mPa.s] bei T [°C] [2)] | | | | | | |
| 170 | – | 960 | 3360 | – | 660 | 600 |
| 160 | 1020 | 810 | 2550 | 720 | 600 | 570 |
| 150 | 1020 | 750 | 2100 | 660 | 600 | 480 |
| 140 | 780 | 660 | 1740 | 570 | 480 | 420 |
| 130 | 450 | 600 | 1440 | 450 | 420 | 390 |
| 120 | 360 | 548 | 1380 | 450 | 360 | 360 |
| 110 | – | 488 | 930 | 420 | 360 | 360 |
| 100 | – | 473 | – | 420 | 330 | 390 |
| 90 | – | – | – | 340 | 360 | 390 |

[1)] bezogen auf Caprolactam + B)
[2)] niedrige umdrehungsgeschwindigkeit; ca. 5 bis 10 s$^{-1}$ Schergefälle

### Beispiele 32 + 33

In der für die vorhergehenden Beispiele beschriebenen Weise wurden Losungen derselben Blockcopolymeren B) sowie zusätzlich eines Silikonöls (C) (Silikonöl P 300; ein Produkt der BAYER AG) in Caprolactam hergestellt. Die Lösezeit 1 h/140°C und anschließend 15 min/150°C.

Viskositätsdaten finden sich in Tabelle 6. Die Messung erfolgte mit einem Haake-Rotationsviskosimeter. Typ VT 500.

10

Tabelle 6

| Zweiblockcopolymer 6,2 % B) | $\eta$ [mPa.s] bei $\dot{\nu}$ [s$^{-1}$] | | | | |
|---|---|---|---|---|---|
| Temperatur [°C] | 50 | 18 | 6,45 | 4,53 | 2,32 |
| 170 | 430 | 870 | 1910 | 2530 | 4250 |
| 160 | 336 | 650 | 1280 | 1560 | 2490 |
| 150 | 300 | 560 | 1050 | 1370 | 2000 |
| 140 | 275 | 434 | 706 | 823 | 1040 |
| 130 | 225 | 353 | 550 | 590 | 680 |
| + 2 % Silikonöl[1] | | | | | |
| 170 | 500 | 1050 | 2300 | 3100 | 5250 |
| 160 | 397 | 780 | 1600 | 2070 | 3330 |
| 150 | 368 | 684 | 1340 | 1700 | 2630 |
| 140 | 340 | 650 | 1230 | 1500 | 2300 |
| 130 | 315 | 550 | 950 | 1200 | 1700 |

[1] bezogen auf Caprolactam-Blockcopolymer B)

Beispiel 34

In der beschriebenenen Weise wurde eine Mischung aus 283,5 g Caprolactam, 16,5 g (5,5 Gew.-%) des Zweiblockcopolymeren und 53 g Kurzglasfasern hergestellt. Die Losebedingungen entsprachen denen der Beispiele 32 und 33.

Viskositätsdaten (Haake VT 500) finden sich in Tabelle 7.

Tabelle 7

| | $\eta$ [mPa.s] bei $\dot{\nu}$ [s$^{-1}$] | | | | |
|---|---|---|---|---|---|
| Temperatur [°C] | 50 | 18 | 6,45 | 4,53 | 2,32 |
| 170 | 258 | 480 | 990 | 1250 | 2000 |
| 160 | 233 | 20 | 820 | 1030 | 1700 |
| 150 | 204 | 343 | 653 | 870 | 1500 |
| 140 | 196 | 270 | 620 | 820 | 1400 |
| 130 | 194 | 310 | 618 | 810 | 1300 |

Beispiel 35

Als Blockcopolymer B) wurde ein verzweigtes Styrol-Butadien-Blockcopolymer (Cariflex® TR 1184; ein Produkt der SHELL) mit einem Styrolgehalt von ca. 30 Gew.-% zu 10 Gew.-% eingesetzt (Lösebedingungen: 5 h/150°C). Die Viskositätswerte betrugen 225 mPa.s (170°C), 120 mPa.s (160°C), 75 mPa.s (150°C) und 60 mPa.s (140°C).

Beispiel 36

10 Gew.-% eines Styrol-Butadien-Multiblockcopolymeren (Stereon® 840; ein Produkt der FIRESTONE; 43 Gew.-% Styrol) wurden in Caprolactam gelöst (3,5 h/140°C). Die Viskosität betrug 45 mPa.s (170°C), 60 mPa.s (160°C), 75 mPa.s (150°C) und 90 mPa.s (140°C).

Vergleichsbeispiel

Ein statistisches Styrol-Butadien (45 % Styrol (Aldrich 18,290-7)-Copolymer war bei 160°C zu 5 Gew.-% in Caprolactam unlöslich.

**Patentansprüche**

1. Lactammischungen mit einer Viskosität von 10-2000 mPas (150°C, 20 sec$^{-1}$ im Rotationsviskosimeter) in der Schmelze, dadurch gekennzeichnet, daß sie

   A) ω-Lactame unter Zusatz von

   B) 1 - 15 Gew.-%, bezogen auf (A + B), an ungesättigten Vinylaromat-Dien-Blockcopolymeren (B), bestehend aus 10 - 85 Gew.-% an Vinylaromat-Einheiten
   und 15-90 Gew.-% an Dieneinheiten,

   wobei die Blockcopolymeren (B) auch nachträglich gegebenenfalls durch teilweise Hydrierung der Weichsegmente bis zu einem Hydrierungsgrad von 60 % und/oder Epoxidierung und/oder Pfropfung mit reaktiven Monomeren und/oder anderen Modifizierungsmitteln, modifiziert sein können, wobei die Blockpolymere (B) gelöst vorliegen und unlösliche Anteile nicht mehr als 5 % betragen, gegebenenfalls zusätzlich

   C) 0 - 20 Gew.-%, bezogen auf (A + B), mit den Blockcopolymeren (B) kompatibler Stoffe wie Polybutadien(öl)e, hydroxyl- und phenylterminierte Polybutadien(öl)e, Polyethylenwachse, Poly-α-olefin(öl)e, Polyisopren(öl)e, Polyoctylen(öl)e, Mineralöle bzw. Schmiermittel auf Basis von Aliphaten, Aromaten und Cycloaliphaten, mineralöllösliche Polyether, alkylmodifizierte Polyether, Silikon-(öl)e, Ligroine, natürliche bzw. synthetische Wachse
   sowie

   D) 0 - 50 Gew.-%, bezogen auf (A + B + C) an Füll- und Verstärkungsstoffen, sowie gegebenenfalls weiteren üblichen Zusatzstoffen,
   enthalten.

2. Lactammischungen nach Anspruch 1, dadurch gekennzeichnet, daß in den Vinylaromat-Dien-Blockcopolymeren (B) für die Vinylaromat-Blöcke darin die Monomeren Styrol, α-Methylstyrol, m- bzw. p-Methylstyrol (bzw. ihr Gemisch, "Vinyltoluol") sowie 2- und 4-Vinylpyridin sind und zum Aufbau der Dien-Blöcke darin die Monomeren Butadien, Isopren und 2,3-Dimethylbutadien sind.

3. Lactammischungen nach Ansprüchen 1 und 2, dadurch gekennzeichnet, daß als Blockcopolymere (B) A'B'-Diblock-Copolymere, A'B'A'- bzw. B'A'B'-Triblockcopolymere, (A'B')$_n$-Multiblockcopolymere, gegebenenfalls sternförmig oder auch verzweigt in den Blöcken, gegebenenfalls Mischblöcke ("tapered" oder "overlap-structures") enthaltend, gegebenenfalls chemisch nachträglich modifiziert, eingesetzt werden wie Styrol-Butadien-Diblockcopolymere, Styrol-Isopren-Diblockcopolymere, Styrol-Butadien-Styrol- oder Styrol-Isopren-Styrol-Triblockcopolymere, Styrol-Butadien-Multiblockcopolymere bzw. Styrol-Isopren-Multiblockcopolymere"carboxylierte" bzw. Maleinsäureanhydrid gepfropfte, vorzugsweise Styrol-Butadien(-Styrol-Tri)block-copolymere, epoxidierte Styrol-Butadien-Styrol-Triblockcopolymere.

4. Lactammischungen nach Ansprüchen 1 bis 3, enthaltend als Komponente C) nieder- und/oder hochmolekulare Substanzen, welche mit Polydienen homogen vermischbar sind bzw. homogene Mischungen bzw. Lösungen ergeben und (mittlere) Molekulargewichte ($M_n$) von mindestens 200 g/mol und Siedepunkte von mindestens 200°C und Schmelz-(Erweichungs)punkte von maximal 150°C haben, wobei sie im Bereich von 20 bis 60°C flüssig sein sollen.

5. Lactammischungen nach Ansprüchen 1 bis 4, dadurch gekennzeichnet, daß als ω-Lactame ε-Caprolactam, gegebenenfalls in Kombination mit anderen ω-Lactamen (bevorzugt ω-Laurinlactam), eingesetzt wird

6. Lactammischungen nach Ansprüchen 1 bis 5, dadurch gekennzeichnet, daß neben den Lactamen einbaubare Weichsegmente bzw. Elastomere anwesend sind.

7. Lactammischungen nach Ansprüch 1 bis 6, dadurch gekennzeichnet, daß sie Füll- und/oder Verstärkungsstoffe (D) in einer Menge von 5 bis 50 Gew.-%, enthalten.

**Claims**

1. Lactam mixtures having a melt viscosity of 10-2,000 mPas (150°C, 20 sec$^{-1}$ in a rotational viscosimeter), characterized in that they contain

   A) ω-lactams with addition of

B) 1 to 15% by weight, based on (A + B), of unsaturated aromatic vinyl compound/diene block copolymers (B) consisting of

10 to 85% by weight of aromatic vinyl units and

15 to 90% by weight of diene units,

the block copolymers (B) optionally being subsequently modified by partial hydrogenation of the soft segments up to a degree of hydrogenation of 60% and/or by epoxidation and/or by grafting with reactive monomers and/or other modifying agents, the block polymers (B) being present in dissolved form and insoluble components making up no more than 5%, and optionally

C) 0 to 20% by weight, based on (A + B), of substances compatible with the block copolymers (B), such as polybutadiene(oil)s, polyethylene waxes, poly-$\alpha$-olefin(oil)s,polyisoprene(oil)s, polyoctylene-(oil)s, mineral oils and lubricants based on aliphatic, aromatic and cycloaliphatichydrocarbons, polyethers soluble in mineral oil, alkyl-modified polyethers, silicone(oil)s, ligroins, natural and synthetic waxes

and

D) 0 to 50% by weight, based on (A + B + C), of fillers and reinforcing materials and optionally other typical additives.

2. Lactam mixtures as claimed in claim 1, characterized in that, in the aromatic vinyl compound/diene block copolymers (B), the monomers for the aromatic vinyl blocks are styrene, $\alpha$-methyl styrene, m- and p-methyl styrene (or the mixture thereof known as "vinyl toluene") and also 2- and 4-vinyl pyridine while the monomers for the synthesis of the diene blocks are butadiene, isoprene and 2,3-dimethyl butadiene.

3. Lactam mixtures as claimed in claims 1 and 2, characterized in that the block copolymers (B) used are A'B' two-block copolymers, A'B'A' or B'A'B' three-block copolymers, (A'B')$_n$ multiblock copolymers, optionally of star-like structure or even branched in the blocks, optionally containing mixed blocks (tapered or overlap structures), optionally subsequently chemically modified, such as styrene/butadiene two-block copolymers, styrene/isoprene two-block copolymers, styrene/butadiene/styrene three-block copolymers, styrene/isoprene/styrene three-block copolymers, styrene/butadiene multiblock copolymers or styrene/isoprene multiblock copolymers, "carboxylated" or maleic-anhydride-grafted; preferably styrene/butadiene(/styrene three-) block copolymers, epoxidized styrene/butadiene/styrene three-block copolymers.

4. Lactam mixtures as claimed in claims 1 to 3 containing as component C) low molecular weight and/or high molecular weight substances which are homogeneously miscible with or form homogeneous mixtures or solutions with polydienes and which have (average) molecular weights ($M_n$) of at least 200 g/mol, boiling points of at least 200°C and melting (softening) points of at most 150°C, having to be liquid at temperatures of 20 to 60°C.

5. Lactam mixtures as claimed in claims 1 to 4, characterized in that $\epsilon$-caprolactam, optionally in combination with other $\omega$-lactams (preferably $\omega$-lauric lactam), is preferably used as the $\omega$-lactam.

6. Lactam mixtures as claimed in claims 1 to 5, characterized in that incorporable soft segments or elastomers are present in addition to the lactams.

7. Lactam mixtures as claimed in claims 1 to 6, characterized in that they contain fillers and/or reinforcing materials (D) in a quantity of 5 to 50% by weight.

## Revendications

1. Mélanges à base de lactames ayant une viscosité de 10 à 2000 mPa.s (à 150°C, 20 s$^{-1}$ au viscosimètre rotatif) à l'état fondu, caractérisés en ce qu'ils contiennent

A) des $\omega$-lactames, additionnés de

B) 1 à 15% en poids, par rapport à (A + B), de copolymères séquencés insaturés, composé vinylaromatique/diène (B)

consistant pour 10 à 85 % en poids en motifs vinylaromatiques et

15 à 90 % en poids en motifs diéniques,

les copolymères séquencés B) pouvant également être soumis à une modification ultérieure par hydrogénation partielle des segments mous jusqu'à un taux d'hydrogénation de 60 % et/ou par époxydation et/ou par greffage par des monomères réactifs et/ou par d'autres agents modifiants, les copolymères séquencés B) étant à l'état dissous, les fractions insolubles ne dépassant pas 5 %, et le cas échéant en outre,

C) 0 à 20 % en poids, par rapport à A + B), de substances compatibles avec les copolymères séquencés B), telles que des polybutadiènes et huiles de polybutadiène, des polybutadiènes et huiles de polybutadiène à groupes terminaux hydroxy et phényle, des cires de polyéthylène, des poly-α-oléfines et huiles de poly-α-oléfines, des polyisoprènes et huiles de polyisoprène, des polyoctylènes et huiles de polyoctylène, des huiles minérales ou agents lubrifiants à base de composés aliphatiques, aromatiques et cycloaliphatiques, des polyéthers solubles dans les huiles minérales, des polyéthers à modification alkylique, des silicones et huiles de silicone, des essences minérales, des cires naturelles ou synthétiques,
et

D) 0 à 50 % en poids, par rapport à A) + B) + C), de matières de charges et matières renforçantes, et le cas échéant d'autres additifs usuels.

2. Mélanges à base de lactames selon la revendication 1, caractérisés en ce que, dans les copolymères séquencés, composé vinylaromatique-diène B), les blocs vinylaromatiques sont constitués des monomères styrène, α-méthyl-styrène, m- ou p-méthylstyrène (ou leur mélange, "vinyltoluène"), 2- et 4-vinylpyridine, et les blocs diéniques sont constitués des monomères butadiène, isoprène et 2,3-diméthylbutadiène.

3. Mélanges à base de lactames selon les revendications 1 et 2, caractérisés en ce que les copolymères séquencés B) sont des copolymères à deux blocs A'B', des copolymères à trois blocs A'B'A' ou B'A'B', des copolymères à blocs multiples $(A'B')_n$, éventuellement en forme d'étoile ou encore ramifiés dans les blocs, contenant le cas échéant des blocs mélangés (structures "tapered" ou "overlap"), ayant subi le cas échéant des modifications chimiques ultérieures, par exemple des copolymères à deux blocs styrène-butadiène, des copolymères à deux blocs styrène-isoprène, des copolymères à trois blocs styrène-butadiène-styrène ou styrène-isoprène-styrène, des copolymères à blocs multiples styrène-butadiène ou des copolymères à blocs multiples styrène-isoprène, des copolymères "carboxylés" ou greffés par l'anhydride maléique, de préférence à trois blocs styrène-butadiène-styrène, des copolymères à trois blocs styrène-butadiène-styrène époxydés.

4. Mélanges à base de lactames selon les revendications 1 à 3, contenant en tant que composants C) des substances à bas poids moléculaire et/ou à haut poids moléculaire donnant des mélanges homogènes ou des solutions homogènes avec les polydiènes et ayant des poids moléculaires (moyens) $\overline{M}_n$ d'au moins 200 g/mol, des points d'ébullition d'au moins 200 °C et des points de fusion (ramollissement) de 150 °C au maximum, qui sont liquides dans l'intervalle de 20 à 60 °C.

5. Mélanges à base de lactames selon les revendications 1 à 4, caractérisés en ce qu'ils contiennent, en tant qu'ω-lactame, l'ε-caprolactame, éventuellement en combinaison avec d'autres ω-lactames (de préférence l'ω-laurolactame).

6. Mélanges à base de lactames selon les revendications 1 à 5, caractérisés en ce que, en plus des lactames, ils contiennent des segments mous ou élastomères chimiquement combinables.

7. Mélanges à base de lactames selon les revendications 1 à 6, caractérisés en ce qu'ils contiennent les matières de charge et/ou matières renforçantes D) en quantité de 5 à 50 % en poids.